# EUROPÄISCHE PATENTSCHRIFT

(11) **EP 4 234 372 B1**
(45) Veröffentlichungstag und Bekanntmachung des Hinweises auf die Patenterteilung: **24.12.2025**
(21) Anmeldenummer: 23157122.5
(22) Anmeldetag: 16.02.2023
(51) Int. Cl.: B62D 21/17, B62D 29/04

(54) **BORDNETZ-BAUTEIL EINES KRAFTFAHRZEUGES**
VEHICLE ELECTRICAL SYSTEM COMPONENT
COMPOSANT DE RÉSEAU DE BORD D'UN VÉHICULE AUTOMOBILE

(30) Priorität: 25.02.2022 DE 102022201986
(43) Veröffentlichungstag der Anmeldung: 30.08.2023
(73) Patentinhaber: LEONI Bordnetz-Systeme GmbH, 97318 Kitzingen (DE); LEONI Wiring Systems Slovakia spol. s r.o., 911 01 Trencin (SK)
(72) Erfinder: ENDRES, Michael, 97299 Zell am Main (DE); FALASTA, Stefan, 911 01 Trencin (SK); HILLENKÖTTER, Sven, 97508 Untereuerheim (DE); KORTE, Matthias, 97084 Würzburg (DE); MARKERT, Jonathan, 97234 Reichenberg (DE); SOOSAI DAS, Gerard, 97070 Würzburg (DE)
(74) Vertreter: FDST Patentanwälte

(56) Entgegenhaltungen:
- WO-A1-2020/048736
- DE-A1- 102010 007 108
- DE-A1- 102014 213 881
- DE-B4- 102014 005 001

## Beschreibung

Die Erfindung betrifft ein Bordnetz-Bauteil für ein Kraftfahrzeug mit einem Chassis-Trägerbauteil aus einem Faserverbundwerkstoff und mit zwei sich in einer Längsrichtung erstreckende elektrischer Leiter eines elektrischen Leistungsstrangs, wobei die Leiter im Trägerbauteil eingebettet sind.

Ein derartiges Bordnetz-Bauteil ist beispielsweise aus der DE 10 2010 007 108 A1 zu entnehmen. Mehrere Leiter, die unterschiedlich ausgebildet sein können, sind integraler Bestandteil eines Karosserie-Bauteils. Die mehreren Leiter sind beispielsweise als Masseleitung, als Versorgungsleitung und als Datenleitung ausgebildet.

Aus der DE 10 2014 005 001 B4 ist ebenfalls ein Karosserieteil aus einem Faserverbundwerkstoff zu entnehmen, bei dem ein elektrischer Leistungsstrangs, welcher nach Art einer Sandwich- oder Laminatstruktur ausgebildet ist, an einer Unterseite des Karosserieteils angeordnet ist.

Weitere Karosserieteile aus Faserverbundwerkstoff mit daran angebrachten elektrischen Leitern sind beispielsweise zu entnehmen aus der DE 10 2014 213 881 A1 sowie der US 2010 / 0195959 A1.

Aus WO 2020/048736 A1 ist ein beispielsweise einen Rahmen bildendes Strukturelement aus einem faserverstärkten Kunststoff zu entnehmen, in dem Flachleiter eingebettet sind.

Die Integration eines solchen, auch als Backbone bezeichneten Leistungsstrangs eines Kraftfahrzeug-Bordnetzes in ein Trägerbauteil aus Faserverbundwerkstoff weist den Vorteil auf, dass durch den Kunststoff des Chassis-Trägerbauteils eine elektrische Isolation gegeben ist und daher auf einen separaten Isolationsmantel verzichtet werden kann. Auch sind keine zusätzlichen Befestigungselemente oder Befestigungsmaßnahmen für den Leistungsstrang am Fahrzeug erforderlich.

Gleichzeitig ergeben sich durch die Integration in das typischerweise hochfeste und mitunter auch spröde Material des Faserverbundwerkstoffes zusätzliche Anforderungen, die im Hinblick auf eine Dauer-Gebrauchsfähigkeit und damit der Lebensdauer zu berücksichtigen sind. Daneben sind auch Anforderungen für die Montage und Integration der Leiter in den Faserverbundwerkstoff zu berücksichtigen, um nicht die Integrität des Chassis-Trägerbauteils zu sehr zu beeinträchtigen. Hierunter wird verstanden, dass die eigentliche Funktion sowie die Eigenschaften des Chassis-Trägerbauteils wie beispielsweise hohe (Eigen-) Steifigkeit, hohe Tragfähigkeit usw. aufrechterhalten bleiben.

Ausgehend hiervon liegt der Erfindung die Aufgabe zugrunde, ein Bordnetz-Bauteil mit in einem Chassis-Trägerbauteil aus einem Faserverbundwerkstoff integrierten Leitern anzugeben, welches im Hinblick auf eine möglichst lange Lebensdauer verbessert ist. Alternativ oder ergänzend liegt der Erfindung die Aufgabe zugrunde, ein derartiges Bordnetz-Bauteil anzugeben, bei dem die Integrität des Chassis-Trägerbauteils möglichst wenig beeinträchtigt ist.

Die Aufgabe wird gemäß Erfindung gelöst durch ein Bordnetz-Bauteil für ein Kraftfahrzeug gemäß Anspruch 1, mit einem Chassis-Trägerbauteil aus einem Faserverbundwerkstoff, mit zwei sich in einer Längsrichtung erstreckende elektrische Leiter eines elektrischen Leistungsstrangs, die ein Leiterpaar bilden. Die Leiter des Leiterpaares sind im Trägerbauteil eingebettet und durch eine Isolierschicht aus einem elastomeren Material getrennt.

Durch die Anordnung von elastomeren Material als Zwischenlage zwischen den beiden Leitern werden insbesondere zwei technische Vorteile erreicht. Zum einen dient die Zwischenlage zur Dämpfung von Vibrationen, die während des Betriebs des Fahrzeugs auftreten. Dadurch ist die mechanische Belastung der Leiter reduziert. Grundsätzlich führen Vibrationen beim Kraftfahrzeug-Bordnetz häufig zu Problemen, da beispielsweise Leiter brechen oder Kontaktverbindungen gelöst werden oder es auch zu unerwünschten Scheuer-Effekten kommt.

Darüber hinaus ermöglicht die elastomere Zwischenlage eine Kompensation von (eigen-) Bewegungen des Leiters, speziell infolge von thermischen Ausdehnungseffekten. Hierbei ist insbesondere zu berücksichtigen, dass es sich bei der hier betroffenen Anwendung insbesondere um Leiter eines (Hoch-) Leistungsstrangs und speziell eines sogenannten Backbone eines Kraftfahrzeugs handelt. Über die Leiter erfolgt daher eine Haupt-Leistungsversorgung von Komponenten innerhalb des Fahrzeugs. Typischerweise stellt der Backbone und damit auch der hier beschriebene Leistungsstrang eine Haupt - Verbindungsleitung zwischen einem vorderen Teilbereich und einen rückwärtigen Teilbereich des Fahrzeugs dar, um elektrische Leistung zu übertragen. Beispielsweise verbindet der Leitungsstrang eine (Hoch-) Spannungsquelle, wie eine Batterie oder einen Generator, mit ein oder mehreren Verbrauchern. Typischerweise beginnt und/oder endet der Leistungsstrangs an einem Leistungsverteiler, von dem aus mehrere Verbraucher mit elektrischer Leistung versorgt werden.

Der Leistungsstrang ist typischerweise für eine Übertragung von Strömen von mehreren 10 A, vorzugsweise von mehreren 100 A ausgebildet. Der Leistungsstrang kann dabei für unterschiedliche Bordnetz-Spannungen ausgelegt und eingesetzt sein, beispielsweise sowohl für ein herkömmliches 12 V-Bordnetz als auch für ein 48 V-Bordnetz oder ein Hochvolt-Bordnetz, beispielsweise mit einer Bordnetzwechselspannung von 30 V oder mehr oder einer Bordnetzgleichspannung von 60 V oder mehr. Speziell dient der Leistungsstrangs auch für den Einsatz in elektromotorisch angetriebenen Kraftfahrzeugen (Elektrofahrzeuge) und dient beispielsweise zur Leistungsversorgung eines elektrischen Fahrmotors. Bei der Anwendung in einem Elektrofahrzeug im HV-Bereich ist der Leistungsstrang beispielsweise für eine Bordnetzspannung von typischerweise mehreren 100 V ausgebildet.

Sofern vorliegend von einem Trägerbauteil aus einem Faserverbundwerkstoff gesprochen wird, so wird hierunter ein grundsätzlich bekanntes Bauteil aus einem Kohlefaser- (CFK) oder Glasfaser-Verbundwerkstoff (GFK) verstanden, bei der die Leiter in der Matrix des Verbundwerkstoffes integriert und eingebettet sind. Dies bedeutet, dass die Matrix des Verbundwerkstoffes, also das Verbund-Material, die beiden Leiter - in einem Querschnitt betrachtet - vollumfänglich umgibt. Die Matrix ist durch einen Kunststoff mit den darin eingebetteten Fasern gebildet.

Unter Einbetten wird vorliegend verstanden, dass das Leiterpaar unmittelbar und im Querschnitt betrachtet über den gesamten Umfang unmittelbar vom Material des Faserverbundwerkstoffes umgeben sind. Bei den Leitern handelt es sich vorzugsweise um blanke Leiter, die also nicht von einem (zusätzlichen) Isolationsmantel umgeben sind.

Sofern vorliegend von einem Chassis-Trägerbauteil gesprochen wird, so wird hierunter ein Karosseriebauteil eines Kraftfahrzeugs verstanden, welches insbesondere auch zur Aufnahme von Kräften ausgebildet ist. Speziell ist es ein Teil der tragenden Karosserie-Struktur oder auch ein Teil eines Verkleidungs- oder sonstigen Trägerelements. Speziell handelt es sich bei dem Chassis-Trägerbauteil um einen (Fahrzeug-) Boden, beispielsweise um einen Boden einer Fahrgastzelle. Bei Elektrofahrzeugen ist typischerweise unterhalb der Fahrgastzelle der Batteriespeicher in einem Sandwichboden angeordnet.

In bevorzugter Weiterbildung besteht die Isolierschicht aus einem Gummi oder einem thermoplastischen Elastomer. Derartige Materialien eignen sich besonders und bieten sowohl eine gute elektrische Isoliereigenschaft als auch ein gutes elastisches Verhalten. Die Härte der Isolierschicht liegt beispielsweise in einem Bereich zwischen 20 Shore A bis 90 Shore A oder auch - speziell bei thermoplastischen Elastomeren - etwas darüber, beispielsweise im Bereich von 30 Shore A bis 80 Shore D.

Bei den Leitern handelt es sich um Flachleiter, insbesondere um massive Flachleiter, speziell nach Art von Strom- oder Leiterschienen.

Die zwischen diesen angeordnete Isolierschicht ist nach Art eines Isolierstreifens ausgebildet, welcher zwischen den beiden Flachleiter angeordnet und gelegt ist. In bevorzugter Weiterbildung weisen dabei der Isolierstreifen einerseits und die Flachleiter andererseits die gleiche Breite auf. Insgesamt ergibt sich dadurch eine Art gestapelte Sandwichstruktur, bei der sich die bandförmigen Flachleiter mit dem Isolierstreifen abwechseln. Bei dieser gestapelte Sandwichstruktur handelt es sich um eine vorgefertigte Baueinheit, welche bei der Herstellung des Trägerbauteils aus Faserverbundwerkstoff, also beispielsweise bei einem Laminierprozess, als Einlegeteil eingebracht wird. Dadurch ist eine gute Integration dieser Sandwichstruktur in das Bauteil erreicht.

Gemäß einer bevorzugten Ausgestaltung weisen die Leiter an einer und vorzugsweise an beiden Endseiten Leiterenden auf, welche aus dem Trägerbauteil herausgeführt sind und außerhalb des Trägerbauteils eine Kontaktfläche ausbilden. Durch die jeweilige Kontaktfläche ist eine Anschlussmöglichkeit für eine weitergehende Anbindung an das übrige Bordnetz ermöglicht.

Bevorzugt sind die Leiterenden dabei abgewinkelt ausgebildet, sodass sie geeignet aus dem Trägerbauteil herausgeführt werden und zudem auch die gewünschten Kontaktflächen ausbilden. Speziell sind sie dabei entweder U- oder Z-förmig ausgebildet. Sie weisen dabei jeweils einen aus dem Inneren des Trägerbauteils nach außen führenden Teilabschnitt auf, an den sich ein abgewinkelter Endabschnitt anschließt, welcher die Kontaktfläche ausbildet. Dieser Endabschnitt ist dabei vorzugsweise parallel zu einer Oberseite des Trägerbauteils orientiert.

Die elastomere Isolierschicht ist insbesondere auch im nach außen führenden Teilabschnitt zwischen den Leitern angeordnet.

**In** bevorzugter Ausgestaltung schließen sich die Kontaktflächen der beiden Leiter in Längsrichtung aneinander an. Dadurch ist eine kompakte Ausgestaltung erreicht. Bei der Ausführungsvariante mit den abgewinkelten Leiterenden, speziell mit den parallel zur Oberfläche des Trägerbauteils orientierten Endabschnitten, sind die Kontaktflächen und damit die Endabschnitte der beiden Leiter gegensinnig abgewinkelt und befinden sich bevorzugt auf gleicher Höhe. Dadurch ist insgesamt eine sehr kompakte Ausgestaltung erreicht und die Kontaktflächen sind quasi unmittelbar anliegend zur Oberfläche des Trägerbauteils ausgebildet. **In** einer Ausführungsvariante liegen die Endabschnitte beispielsweise auf der Oberfläche des Trägerbauteils auf oder sind von dieser nur geringfügig, beispielsweise wenige Millimeter bis beispielsweise 10-20 mm beabstandet.

In bevorzugter Weiterbildung sind mehrere Leiterpaare, also insbesondere mehrere Sandwichstrukturen nebeneinander angeordnet, also in Querrichtung Q quer zur Längsrichtung L. Durch diese Maßnahme sind innerhalb des Trägerbauteils mehrere elektrische Leiterstränge ausgebildet. Über diese kann eine Stromverteilung auf mehrere Leiterstränge erfolgen, sodass die Belastung eines einzelnen Leiterstrangs geringgehalten ist. Eine jeweilige Sandwichstruktur kann daher kleiner und für eine nur geringe Stromtragfähigkeit ausgebildet werden. Dies erleichtert die Integration im Trägerbauteil, da die Sandwichstruktur weniger massiv ausgebildet sein muss. Durch die Aufteilung auf mehrere Sandwichstrukturen ist die Integrität und damit die Tragfunktion des Trägerbauteils allenfalls gering beeinträchtigt.

Die beiden Leiter des Leiterpaares bildet im eingebauten Zustand vorzugsweise einen Hin- sowie einen Rückleiter aus. Der eine Leiter ist dabei im angeschlossenen und im Fahrzeug eingebauten Zustand an einer Versorgungsspannung und der andere Leiter an einem Massepotential angeschlossen. Insbesondere handelt es sich bei dem Leistungsstrang um eine Gleichstrom-Leitung zwischen zwei elektrischen Komponenten.

Die Aufgabe wird gemäß Erfindung weiterhin gelöst durch ein Bordnetz-Bauteil mit einem Chassis-Trägerbauteil aus einem Faserverbundwerkstoff mit zumindest zwei sich in einer Längsrichtung erstreckende elektrische Leiter eines Leistungsstrangs, die im Trägerbauteil eingebettet sind, wobei die beiden Leiter elektrisch miteinander verbunden sind. Die beiden Leiter bilden eine elektrisch miteinander verbundene Leitergruppe aus.

Durch die elektrische Verbindung wird in vorteilhafter Weise eine Aufteilung des gesamten Leistungsstrangs auf mehrere Teilstränge erreicht, sodass die einzelnen Teilsträngen und damit Leiter weniger massiv ausgebildet sein können und damit die Integrität des Trägerbauteils weniger beeinträchtigen, wie dies zuvor bereits im Zusammenhang mit den nebeneinander angeordneten Sandwichstrukturen ausgeführt wurde.

Diese erfindungsgemäße Lösung mit den elektrisch miteinander verbundenen Leitern wird vorzugsweise mit der zuvor beschriebenen Sandwichstruktur kombiniert, bei der zwischen zwei Leitern die elastomere Isolierschicht angeordnet ist.

Bei den beiden Leitern der Leitergruppe handelt sich beispielsweise um die beiden Leiter der Sandwichstruktur, d.h. die Leiter des Leiterpaares sind elektrisch miteinander verbunden. In bevorzugter Ausgestaltung sind jedoch zumindest zwei Sandwichstrukturen vorgesehen und die beiden Leiter der Leitergruppe sind durch jeweils einen Leiter der jeweiligen Sandwichstruktur gebildet.

Bei den Leitern der Leitergruppe handelt es sich wiederum insbesondere um Flachleiter, speziell massive Flachleiter und insbesondere um Strom- oder Leiterschienen.

In bevorzugter Ausgestaltung sind die beiden Leiter der Leitergruppe innerhalb des Trägerbauteils nebeneinander angeordnet, d. h. sie sind in einer Richtung quer zur Längsrichtung nebeneinander angeordnet. Da die Trägerbauteile typischerweise eine begrenzte Dicke aufweisen ist durch die Verteilung der mehreren Leiter der Leitergruppe in Querrichtung (und damit senkrecht zur Dickenrichtung) eine gute Verteilung innerhalb des Faserverbundwerkstoffs erreicht und dessen Integrität ist nur gering beeinflusst.

Über die elektrisch leitende Verbindung werden dabei die zumindest zwei Leiter der Leitergruppe in bevorzugter Ausgestaltung elektrisch parallel verschaltet. Hierdurch wird daher im Betrieb eine Aufteilung der Strombelastung auf die mehreren Leiter erreicht, wie dies bereits zuvor beschrieben wurde.

Die zumindest zwei Leiter der Leitergruppe sind hierzu vorzugsweise an zumindest einem ihrer Leiterenden und insbesondere an beiden Leiterenden elektrisch miteinander verbunden.

Alternativ hierzu besteht grundsätzlich auch die Möglichkeit, dass die Leiter seriell miteinander verbunden sind.

In zweckdienlicher Ausgestaltung weisen auch hier die Leiter insbesondere beidseitig Leiterenden auf, welche aus dem Trägerbauteil herausgeführt sind. Die elektrisch leitende Verbindung zwischen den beiden Leiter erfolgt dabei vorzugsweise unmittelbar am Trägerbauteil und damit unmittelbar im Bereich des Trägerbauteils.

Wie bereits zuvor beschrieben, weisen die Leiterenden bevorzugt abgewinkelte Kontaktflächen auf, die insbesondere parallel zur Oberfläche des Trägerbauteils verlaufen. Im Hinblick auf die konkrete Ausgestaltung dieser abgewinkelten Leiterenden wird auf die vorhergehende Beschreibung im Zusammenhang mit der Sandwichstruktur verwiesen. Diese aus dem Trägerbauteil hervorstehenden Kontaktflächen sind miteinander über ein Leiterelement elektrisch leitend verbunden. Hierzu ist insbesondere jeweils ein Flachleiter vorgesehen, speziell eine nach Art eines Verbindungsbleches ausgebildete Leiterschiene.

Allgemein sind die zumindest zwei Leiter der Leitergruppe über ein Leiterelement elektrisch miteinander verbunden. Dieses Leiterelement bildet dabei vorzugsweise ein gemeinsames Anschlussterminal für die Leitergruppe aus. Speziell bei der Ausführungsvariante, bei der das Leiterelement die Kontaktflächen miteinander verbindet, ist damit unmittelbar an der Oberseite des Trägerbauteils ein Anschlussterminal geschaffen, über das der Versorgungsstrang an das weitergehende Bordnetz angeschlossen werden kann. Dies erfolgt beispielsweise dadurch, dass das Anschlussterminal einen Anschlussbolzen aufweist, an dem eine elektrische Leitung über ein entsprechendes Kontakt-Verbindungselement, wie beispielsweise ein Kontaktschuh angeschlossen werden kann.

Gemäß einer bevorzugten Ausgestaltung sind mehrere in Sandwichbauweise aufgebaute Leiterpaare nebeneinander angeordnet.

Ein jeweiliges Leiterpaar definiert vorzugsweise im angeschlossenen Zustand einen Hinleiter sowie einen Rückleiter, speziell einer Gleichstromleitung. Der Hinleiter bildet eine Versorgungsleitung und ist typischerweise an einem Pluspol angeschlossen und der Rückleiter bildet einen Masseleiter und ist typischerweise an Massepotenzial angeschlossen.

Die beiden Leiter des in Sandwichbauweise aufgebauten Leiterpaares sind daher elektrisch nicht miteinander verbunden. Gleichzeitig sind die Leiter eines jeweiligen Leiterpaares mit den Leitern des anderen Leiterpaares elektrisch verbunden. Die beiden Hinleiter sowie die beiden Rückleiter der beiden benachbarten Leiterpaare sind daher elektrisch miteinander verbunden und bilden jeweils eine Leitergruppe aus, wie dies zuvor beschrieben wurde.

Gemäß einer bevorzugten Weiterbildung ist weiterhin vorgesehen, dass im angeschlossenen Zustand die Leiter an unterschiedlichen Spannungsquellen mit unterschiedlichem Spannungspotential angeschlossen sind. Hierdurch werden also mehrere Spannungsebenen und damit Teil-Bordnetze bereitgestellt. Es sind daher mehrere Leistungsstränge für unterschiedliche Spannungsebenen ausgebildet. Für zumindest eine und vorzugsweise für jede Spannungsebene sind dabei vorzugsweise jeweils (zumindest) zwei Leiterpaare in Sandwichbauweise ausgebildet, deren Leiter zur Ausbildung der Leitergruppen elektrisch miteinander verbunden sind.

Allgemein besteht die Möglichkeit, dass bei der Leitergruppe mit den elektrisch miteinander verbundenen Leitern als auch bei den in Sandwichbauweise unter Zwischenlage der elastomeren Isolierschicht aufeinander gestapelten Leitern mehr als zwei Leiter, beispielsweise drei, vier oder auch mehr Leiter verwendet werden können. Im Falle der Sandwichbauweise sind jeweils einander benachbarte Leiter (Leiterpaare) durch die elastomere Isolierschicht voneinander getrennt, wobei die Leiter unmittelbar an der Isolierschicht anliegen. Im Falle der Leitergruppe sind die mehreren Leiter elektrisch miteinander verbunden und vorzugsweise in Querrichtung nebeneinander angeordnet. Zwischen den Leitern der Leitergruppe ist vorzugsweise in allen Ausführungsvarianten (lediglich) das Material des Faserverbundwerkstoffes als Isoliermaterial angeordnet.

Ein Ausführungsbeispiel der Erfindung wird nachfolgend anhand der Figuren näher erläutert. Diese zeigen in vereinfachten Darstellungen
- FIG 1: eine perspektivische ausschnittsweise Darstellung eines Bordnetz-Bauteils,
- FIG 2: einen Längsschnitt durch das Bordnetz-Bauteil gemäß FIG 1,
- FIG 3: eine ausschnittsweise Darstellung einer Sandwichstruktur eines Leiterpaars mit dazwischen angeordneter Isolierschicht sowie
- FIG 4: eine ausschnittsweise und schematisierte Darstellung eines Kraftfahrzeugs.

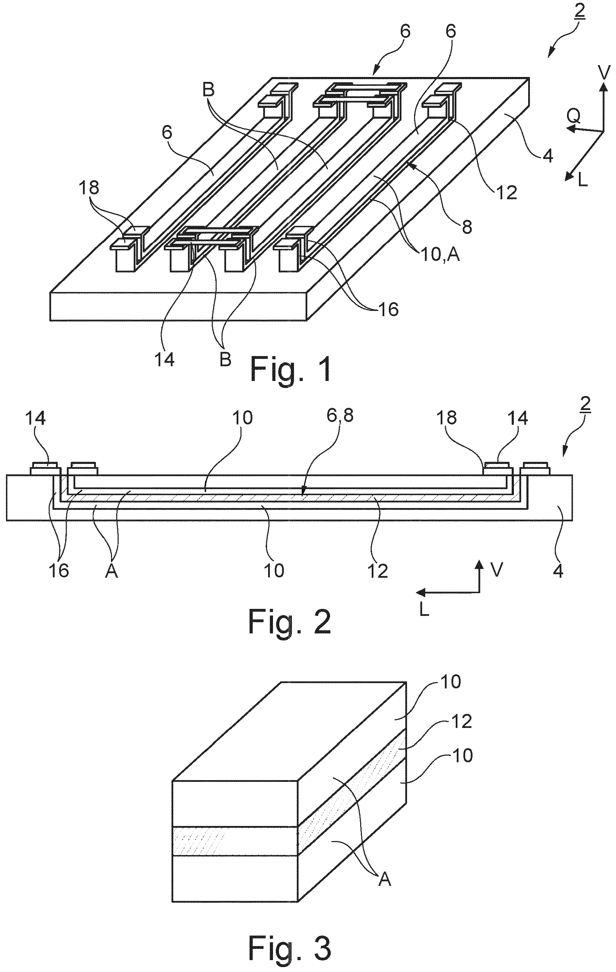

In FIG 1 ist ein Bordnetz-Bauteil 2, beispielsweise ein Fahrzeug-Boden eines Kraftfahrzeugs ausschnittsweise und stark schematisiert dargestellt. Das Bordnetz-Bauteil 2 weist ein Trägerbauteil 4 aus einem Faserverbundwerkstoff auf, beispielsweise aus CFK oder GFK. In dieses Trägerbauteil 4 sind mehrere Leistungsstränge 6 integriert, welcher Teil eines hier nicht weiter dargestellten Kraftfahrzeug-Bordnetzes sind. Die Leistungsstränge 6 sind dabei im Faserverbundwerkstoff eingebettet. Dies bedeutet, dass sie - bis auf endseitige Abschnitte - vollständig vom Material des Trägerbauteils 4 umgeben sind.

Unter Leistungsstrang 6 wird vorliegend jeweils eine Leiteranordnung verstanden, welche zwei elektrische Komponenten des Bordnetzes zur Leistungsversorgung miteinander verbindet. Bei dem Ausführungsbeispiel gemäß der Figur 1 sind mehrere Leistungsstränge 6, und zwar insgesamt drei Leistungsstränge 6 ausgebildet.

Ein jeder Leistungsstrangs 6 weist zumindest eine Sandwichstruktur 8 mit zwei nach Art von Leiterschienen ausgebildeten Leitern 10 auf, welche unter Zwischenlage einer Isolierschicht 12 übereinander angeordnet sind. In FIG 1 sind insgesamt vier derartige Sandwichstrukturen 8 dargestellt. Die beiden mittleren Sandwichstrukturen 8 sind über Leiterelemente 14 miteinander verbunden und bilden somit zwei Teilstränge eines gemeinsamen Leistungsstrangs 6.

Das in FIG 1 dargestellte Bordnetz-Bauteil 2 wird beispielsweise in einem Bordnetz mit mehreren Versorgungsquellen und mehreren Spannungsebenen eingesetzt. So ist beispielsweise vorgesehen, dass der mittlere Leistungsstrang 6, welcher durch die beiden miteinander verbundenen Sandwichstrukturen 8 gebildet ist, an einer ersten Versorgungsquelle, beispielsweise mit einer Versorgungsspannung von 12 V angeschlossen ist. Die beiden randseitigen Sandwichstrukturen 8 bilden jeweils einen eigenen Leistungsstrang 6 und sind beispielsweise an einer zweiten Versorgungsquelle, beispielsweise mit einer Versorgungsspannung von 48 V angeschlossen.

Die Isolierschicht 12 - wie insbesondere aus FIG 2 und FIG 3 zu entnehmen ist - liegt jeweils unmittelbar an den beiden Leitern 10 an. Ansonsten sind die Leiter 10 von dem isolierenden Material des Faserverbundwerkstoffes umgeben. Bei den Leitern 10 handelt es sich insbesondere um blanke Leiterschienen aus massivem Metall, speziell Kupfer oder Aluminium. Die Isolierschicht 12 ist jeweils durch einen bandförmigen Isolierstreifen gebildet, welcher vorzugsweise die gleiche Breite wie die Leiter 10 aufweist, wie speziell aus FIG 3 vorgeht. Die Isolierschicht 12 besteht aus einem elastomeren Material, speziell aus Gummi.

Die Isolierschicht 12 dient zum einen zur elektrischen Isolierung der beiden Leiter 10 voneinander. Zum anderen dient sie aufgrund ihrer Elastizität als Vibrationsschutz und/oder zur Kompensation von insbesondere thermisch bedingten Ausdehnungen der Leiter 10.

Die jeweilige Sandwichstruktur 8 und damit auch die Leiter 10 erstrecken sich jeweils in einer Längsrichtung L. Senkrecht hierzu weisen die Leiter 10 in Querrichtung Q eine Breite auf und die gesamte Sandwichstruktur 8 weist in einer Vertikalrichtung V eine Höhe auf.

Die einzelnen Sandwichstrukturen 8 sind jeweils im Trägerbauteil 4 eingebettet und sind vorzugsweise auf gleicher Höhe (in Vertikalrichtung V betrachtet) angeordnet. Die einzelnen Leiter 10, d. h. die oberen Leiter 10 sowie die unteren Leiter 10 einer jeweiligen Sandwichstruktur 8 liegen bevorzugt innerhalb einer gemeinsamen Ebene, welche jeweils durch die Längsrichtung L und die Querrichtung Q aufgespannt ist.

Ein jeweiliger Leiter 10 weist jeweils an seinen beiden Enden abgewinkelte Leiterenden 14 auf. Wie speziell aus der FIG 2 zu entnehmen ist, weist dabei der obere Leiter 10 jeweils U-förmig abgewinkelte Leiterenden 16 und der untere Leiter 10 jeweils in etwa Z-förmig abgewinkelte Leiterenden 16 auf.

Die Leiterenden 16 weisen dabei jeweils einen sich in etwa in Vertikalrichtung V erstreckenden Abschnitt auf, der aus dem Trägerbauteil 4 herausführt und an den sich außerhalb des Trägerbauteils 4 jeweils ein Endabschnitt anschließt, welcher jeweils eine Kontaktfläche 18 ausbildet. Die Endabschnitte und damit die Kontaktflächen 18 erstrecken sich vorzugsweise parallel zu einer Oberfläche des Trägerbauteils 4. Die Endabschnitte des oberen Leiters sind dabei aufeinander zu orientiert und die Endabschnitte des unteren Leiters sind in gegensätzlichen Richtungen orientiert.

Die Leiter 10 sind bis auf den Endabschnitt - und gegebenenfalls ein Teilstück des sich in Vertikalrichtung V orientierten Abschnitts - vollständig im Trägerbauteil 4 integriert. Bevorzugt liegt der Endabschnitt, welcher die Kontaktfläche 18 ausbildet, unmittelbar auf der Oberseite des Trägerbauteils 4 auf, wie dies aus FIG 2 zu entnehmen ist. Über die Kontaktflächen 18 ist jeweils eine Kontaktierungsmöglichkeit für weitergehende Anschlusselemente bereitgestellt.

Wie sich speziell aus der Querschnittsdarstellung der FIG 2 ergibt, ist die Isolierschicht 12 insbesondere auch in den sich vertikal erstreckenden Abschnitten zwischen den beiden Leitern 10 angeordnet. Dadurch kann die Isolierschicht 16 aufgrund ihrer Elastizität sehr gut Ausdehnungen der Leiter 10 in Längsrichtung L kompensieren.

Die beiden Leiter 10 einer jeweiligen Sandwichstruktur 8 bilden ein Leiterpaar A. Im Ausführungsbeispiel ist der eine Leiter 10 des Leiterpaares A mit einer Versorgungsspannung und der andere Leiter 10 mit einem Massepotenzial verbunden. Die beiden Leiter 10 des Leiterpaares A bilden damit Hinleiter und Rückleiter eines Gleichstrom-Versorgungsstranges.

Die zuvor bereits erwähnten Leiterelemente 14, die speziell nach Art von Verbindungsblechen ausgebildet sind, verbinden die Kontaktflächen 18 der Leiter 10 von benachbarten Sandwichstrukturen 8. Und zwar werden jeweils die auf gleichem Spannungspotential liegenden Leiter 10 miteinander verbunden. Jeweils miteinander verbundene Leiter 10 von benachbarten Sandwichstrukturen 8 bilden jeweils eine Leitergruppe B. Die Leiter 10 einer jeweiligen Leitergruppe B sind daher insgesamt parallel verschaltet, sodass der Gesamt-Leistungsstrangs 6 auf zwei Teilstränge aufgeteilt ist. Die Leiterelemente 14 sind an den Kontaktflächen 18 befestigt, insbesondere stoffschlüssig befestigt, beispielsweise angeschweißt. Alternativ sind sie über Schraubverbindungen angeschlossen.

Grundsätzlich besteht die Möglichkeit, dass an den Endabschnitten / Kontaktflächen 18 oder auch an den Leiterelementen 14 spezielle Kontaktanschlüsse ausgebildet sind, wie beispielsweise Anschlussbolzen, sodass die Endabschnitte bzw. die Leiterelemente 14 jeweils Anschlussterminals ausbilden, an denen abgehende Leiteranordnungen, wie beispielsweise herkömmliche Mantelleitungen oder auch weitere Stromschienen angeschlossen werden können.

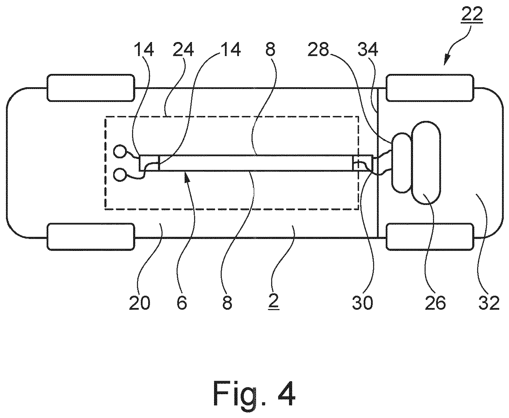

In FIG 4 ist beispielhaft die Positionierung des Bordnetz-Bauteils 2 innerhalb eines Kraftfahrzeugs 22, speziell eines voll elektrisch angetriebenen Kraftfahrzeugs 22 dargestellt. In FIG 4 ist dabei lediglich ein Leistungsstrang 6 beispielhaft dargestellt, wobei dieser aus zwei Teilsträngen mit jeweils einer Sandwichstruktur 8 gebildet ist. Die beiden Sandwichstrukturen 8 sind beidseitig jeweils über zwei Leiterelemente 14 miteinander verbunden. Das Bordnetz-Bauteil 2 ist im Ausführungsbeispiel insbesondere durch einen Boden 20 einer Fahrgastzelle gebildet. Unterhalb dieses Bodens 20 ist eine in FIG 4 gestrichelt dargestellte (Traktions-) Batterie 24 angeordnet, die als Gleichstromquelle und zur Versorgung eines elektrischen Fahrmotors 26 dient. Der Leistungsstrangs 6 verbindet die Traktionsbatterie 24 mit einem dem Fahrmotor 26 zugeordneten Wechselrichter 28. Sie verbindet dabei jeweils einen Pluspol und Minuspol der Batterie 24 mit entsprechenden Anschlüssen am Wechselrichter 28.

Alternativ hierzu verbindet der Leistungsstrangs 6 die Batterie 24 mit beispielsweise einem Leistungsverteiler, an dem mehrere elektrische Verbraucher angeschlossen sind.

Wie aus Fig 4 zu erkennen ist, sind endseitig an dem Leistungsstrang 6 jeweils Verbindungsleitungen 30 angeschlossen, die beispielsweise nach Art von herkömmlichen Mantelleitungen ausgebildet sind. Über die Verbindungsleitungen 30 ist jeweils ein jeweiliger Masse-Leiter bzw. Versorgung-Leiter des Leistungsstrangs 6 mit dem Pluspol bzw. der Minuspol der jeweiligen elektrischen Komponente 24, 28 verbunden. Bei der Verbindungsleitung 30 handelt es sich typischerweise um eine zweiadrige Leitung. Eine jeweilige Ader ist jeweils an einem der beiden Leiterelementen 14 des Leistungsstrangs 6 angeschlossen. Der Fahrmotor 26 sowie der Wechselrichter 28 sind in einem Motorraum 32 angeordnet und die Verbindungsleitung 30 ist im Ausführungsbeispiel durch eine Stirnwand 34 in den Motorraum 32 geführt.

Die Erfindung ist nicht auf das vorstehend beschriebene Ausführungsbeispiel beschränkt. Vielmehr können auch andere Varianten der Erfindung von dem Fachmann hieraus abgeleitet werden, ohne den Gegenstand der Erfindung zu verlassen. Insbesondere sind ferner alle im Zusammenhang mit dem Ausführungsbeispiel beschriebenen Einzelmerkmale auch auf andere Weise miteinander kombinierbar, ohne den Gegenstand der Erfindung zu verlassen.

### Bezugszeichenliste

- 2: Bordnetz-Bauteil
- 4: Trägerbauteil
- 6: Leistungsstrangs
- 8: Sandwichstruktur
- 10: Leiter
- 12: Isolierschicht
- 14: Leiterelement
- 16: Leiterende
- 18: Kontaktfläche
- 20: Boden
- 22: Kraftfahrzeug
- 24: Batterie
- 26: Fahrmotor
- 28: Wechselrichter
- 30: Verbindungsleitung
- 32: Motorraum
- 34: Stirnwand

- L: Längsrichtung
- Q: Querrichtung
- V: Vertikalrichtung

## Patentansprüche

1. Bordnetz-Bauteil (2) für ein Kraftfahrzeug, mit einem Chassis-Trägerbauteil (4) aus einem Faserverbundwerkstoff, mit zumindest zwei sich in einer Längsrichtung (L) erstreckenden elektrischen Leitern (10) eines elektrischen Leistungsstrangs (6), die ein Leiterpaar (A) bilden und bei denen es sich um Flachleiter handelt, wobei das Leiterpaar (A) im Trägerbauteil (4) eingebettet ist, so dass das Leiterpaar (A) im Querschnitt betrachtet unmittelbar und über den gesamten Umfang vom Material des Faserverbundwerkstoffes umgeben ist, **dadurch gekennzeichnet, dass** die Leiter (10) durch eine Isolierschicht (12) aus einem elastomeren Material getrennt sind, wobei die Isolierschicht (12) nach Art eines Isolierstreifens zwischen die beiden elektrischen Leiter (10) gelegt ist, so dass eine gestapelte Sandwichstruktur (8) aus den Leitern (10) und der Isolierschicht (12) gebildet ist, die als Einlegeteil in dem Bauteil (2) eingebracht ist.

2. Bordnetz-Bauteil (2) nach dem vorhergehenden Anspruch, **dadurch gekennzeichnet, dass** die Isolierschicht (12) aus einem Gummi oder einem Thermoplastischen Elastomer besteht.

3. Bordnetz-Bauteil (2) nach einem der vorhergehenden Ansprüche, **dadurch gekennzeichnet, dass** der Isolierstreifen die gleiche Breite wie die Flachleiter aufweist.

4. Bordnetz-Bauteil (2) nach einem der vorhergehenden Ansprüche, **dadurch gekennzeichnet, dass** die Leiter (10) Leiterenden (16) aufweisen, welche aus dem Trägerbauteil (4) herausgeführt sind und außerhalb des Trägerbauteils eine Kontaktfläche (18) ausbilden.

5. Bordnetz-Bauteil (2) nach dem vorhergehenden Anspruch, **dadurch gekennzeichnet, dass** die Leiter (10) an den Leiterenden (16) U- oder Z-förmig ausgebildet sind,

6. Bordnetz-Bauteil (2) nach einem der beiden vorhergehenden Ansprüche, **dadurch gekennzeichnet, dass** die Kontaktflächen (18) der beiden Leiter (10) sich in Längsrichtung (L) aneinander anschließen.

7. Bordnetz-Bauteil (2) nach einem der vorhergehenden Ansprüche, **dadurch gekennzeichnet, dass** mehrere Leiterpaare (A) nebeneinander angeordnet sind.

8. Bordnetz-Bauteil (2) nach einem der vorhergehenden Ansprüche, **dadurch gekennzeichnet, dass** im eingebauten Zustand der eine Leiter (10) des Leiterpaares an Massepotenzial und der andere Leiter (10) an einer Versorgungsspannung angeschlossen ist.

9. Bordnetz-Bauteil (2) nach einem der vorhergehenden Ansprüche, **dadurch gekennzeichnet, dass** die zumindest zwei Leiter (10) elektrisch miteinander verbunden sind und eine Leitergruppe (B) bilden.

10. Bordnetz-Bauteil (2) nach dem vorhergehenden Anspruch, **dadurch gekennzeichnet, dass** zwei Sandwichstrukturen (8) in Querrichtung (Q) nebeneinander angeordnet sind, wobei die beiden Leiter (10) der Leitergruppe (B) jeweils durch einen Leiter (10) der jeweiligen Sandwichstruktur (8) gebildet sind, so dass die zumindest zwei Leiter (10) der Leitergruppe (B) in Querrichtung (Q) nebeneinander angeordnet sind.

11. Bordnetz-Bauteil (2) nach einem der beiden vorhergehenden Ansprüche, **dadurch gekennzeichnet, dass** die zumindest zwei Leiter (10) der Leitergruppe (B) elektrisch parallelgeschaltet sind.

12. Bordnetz-Bauteil (2) nach einem der Ansprüche 9 bis 11, **dadurch gekennzeichnet, dass** die zumindest zwei Leiter (10) der Leitergruppe (B) Leiterenden (16) aufweisen, die aus dem Trägerbauteil (4) herausgeführt sind und unmittelbar am Trägerbauteil (4) miteinander elektrisch verbunden sind.

13. Bordnetz-Bauteil (2) nach einem der Ansprüche 9 bis 12, **dadurch gekennzeichnet, dass** die Leiterenden (16) abgewinkelte Kontaktflächen (18) aufweisen, die über ein Leiterelement (14) elektrisch leitend verbunden sind.

14. Bordnetz-Bauteil (2) nach dem vorhergehenden Anspruch, **dadurch gekennzeichnet, dass** das Leiterelement (14) ein gemeinsames Anschlussterminal für die Leitergruppe (B) bildet.

15. Bordnetz-Bauteil (2) nach einem der vorhergehenden Ansprüche, **dadurch gekennzeichnet, dass** im eingebauten Zustand die Leiter (10) an verschiedenen Spannungsquellen mit unterschiedlichem Spannungspotential angeschlossen sind.

## Claims

1. An on-board network component (2) for a motor vehicle, with a chassis support component (4) of a fibre-reinforced composite material, with at least two electrical conductors (10) of an electrical power cable (6), extending in a longitudinal direction (L), which form a pair of conductors (A) and which are flat conductors, wherein the pair of conductors (A) is embedded into the support component (4), such that the pair of conductors (A), viewed in cross-section, is directly and on its entire periphery surrounded by the material of the fibre-reinforced composite material, **characterized in that** the conductors (10) are separated by an insulating layer (12) of an elastomeric material, wherein the insulating layer (12) is placed between both electrical conductors (10) in the manner of an insulating strip, such that a stacked sandwich structure (8) is formed from the conductors (10) and the insulating layer (12), which is inserted as an insert element into the component (2).

2. The on-board network component (2) according to the preceding claim, **characterized in that** the insulating layer (12) consists of a rubber or a thermoplastic elastomer.

3. The on-board network component (2) according to any one of the preceding claims, **characterized in that** the insulating strip has the same width as the flat conductors.

4. The on-board network component (2) according to any one of the preceding claims, **characterized in that** the conductors (10) have conductor ends (16) that protrude from the support component (4) and form a contact surface (18) outside the support component.

5. The on-board network component (2) according to the preceding claim, **characterized in that** the conductors (10) are configured as a U or Z shape at the ends (16) of the conductors.

6. The on-board network component (2) according to any one of the two preceding claims, **characterized in that** the contact surfaces (18) of both conductors (10) connect to each other in the longitudinal direction (L).

7. The on-board network component (2) according to any one of the preceding claims, **characterized in that** several pairs of conductors (A) are arranged side by side.

8. The on-board network component (2) according to any one of the preceding claims, **characterized in that**, in the mounted state, one of the conductors (10) of the pair of conductors is connected to ground potential and the other conductor (10) is connected to a supply voltage.

9. The on-board network component (2) according to any one of the preceding claims, **characterized in that** the at least two conductors (10) are electrically connected to each other and form a conductor group (B).

10. The on-board network component (2) according to the preceding claim, **characterized in that** two sandwich structures (8) are arranged side by side in the transverse direction (Q), wherein both conductors (10) of the conductor group (B) each are formed by a conductor (10) of the respective sandwich structure (8), such that the at least two conductors (10) of the conductor group (B) are arranged side by side in the transverse direction (Q).

11. The on-board network component (2) according to any one of both preceding claims, **characterized in that** the at least two conductors (10) of the conductor group (B) are electrically connected in parallel.

12. The on-board network component (2) according to any one of claims 9 to 11, **characterized in that** the at least two conductors (10) of the conductor group (B) have conductor ends (16) which protrude from the support component (4) and are electrically connected to each other directly on the support component (4).

13. The on-board network component (2) according to any one of claims 9 to 12, **characterized in that** the conductor ends (16) have angled contact surfaces (18), which are electrically conductively connected by a conductive element (14).

14. The on-board network component (2) according to the preceding claim, **characterized in that** the conductive element (14) forms a common connection terminal for the conductor group (B).

15. The on-board network component (2) according to any one of the preceding claims, **characterized in that**, in the mounted state, the conductors (10) are connected to different voltage sources at different voltage potentials.

## Revendications

1. Composant (2) de réseau de bord pour un véhicule automobile, avec un composant de support (4) de châssis en un matériau composite renforcé avec des fibres, avec au moins deux conducteurs électriques (10) d'un câble d'énergie électrique (6), s'étendant dans une direction longitudinale (L), qui forment une paire de conducteurs (A) et qui sont des conducteurs plats, la paire de conducteurs (A) étant intégrée dans le composant de support (4), de sorte que la paire de conducteurs (A), vue en coupe transversale, est directement et sur toute sa périphérie entourée par la matière du matériau composite renforcé avec des fibres, **caractérisé en ce que** les conducteurs (10) sont séparés par une couche isolante (12) d'une matière élastomère, la couche isolante (12) étant placée entre les deux conducteurs électriques (10) à la manière d'une bande isolante, de sorte qu'une structure sandwich empilée (8) est formée à partir des conducteurs (10) et de la couche isolante (12), qui est insérée en tant qu'élément d'insertion dans le composant (2).

2. Composant (2) de réseau de bord selon la revendication précédente, **caractérisé en ce que** la couche isolante (12) est constituée d'un caoutchouc ou d'un élastomère thermoplastique.

3. Composant (2) de réseau de bord selon l'une quelconque des revendications précédentes, **caractérisé en ce que** la bande isolante a la même largeur que les conducteurs plats.

4. Composant (2) de réseau de bord selon l'une quelconque des revendications précédentes, **caractérisé en ce que** les conducteurs (10) présentent des extrémités (16) de conducteurs qui font saillie à partir du composant de support (4) et constituent une surface de contact (18) à l'extérieur du composant de support.

5. Composant (2) de réseau de bord selon la revendication précédente, **caractérisé en ce que** les conducteurs (10) sont configurés en forme de U ou de Z aux extrémités (16) des conducteurs.

6. Composant (2) de réseau de bord selon l'une quelconque des deux revendications précédentes, **caractérisé en ce que** les surfaces de contact (18) des deux conducteurs (10) se raccordent l'une à l'autre en direction longitudinale (L).

7. Composant (2) de réseau de bord selon l'une quelconque des revendications précédentes, **caractérisé en ce que** plusieurs paires de conducteurs (A) sont disposées les unes à côté des autres.

8. Composant (2) de réseau de bord selon l'une quelconque des revendications précédentes, **caractérisé en ce que**, à l'état monté, l'un des conducteurs (10) de la paire de conducteurs est raccordé au potentiel de masse et l'autre conducteur (10) est raccordé à une tension d'alimentation.

9. Composant (2) de réseau de bord selon l'une quelconque des revendications précédentes, **caractérisé en ce que** lesdits au moins deux conducteurs (10) sont reliés électriquement entre eux et forment un groupe de conducteurs (B).

10. Composant (2) de réseau de bord selon la revendication précédente, **caractérisé en ce que** deux structures sandwich (8) sont disposées l'une à côté de l'autre en direction transversale (Q), les deux conducteurs (10) du groupe de conducteurs (B) étant formés chacun par un conducteur (10) de la structure sandwich (8) respective, de sorte que lesdits au moins deux conducteurs (10) du groupe de conducteurs (B) sont disposés l'un à côté de l'autre en direction transversale (Q).

11. Composant (2) de réseau de bord selon l'une quelconque des deux revendications précédentes, **caractérisé en ce que** lesdits au moins deux conducteurs (10) du groupe de conducteurs (B) sont connectés électriquement en parallèle.

12. Composant (2) de réseau de bord selon l'une quelconque des revendications 9 à 11, **caractérisé en ce que** lesdits au moins deux conducteurs (10) du groupe de conducteurs (B) présentent des extrémités (16) de conducteurs qui font saillie à partir du composant de support (4) et sont reliées électriquement entre elles directement sur le composant de support (4).

13. Composant (2) de réseau de bord selon l'une quelconque des revendications 9 à 12, **caractérisé en ce que** les extrémités (16) de conducteurs présentent des surfaces de contact (18) coudées, qui sont reliées de manière électriquement conductrice par un élément conducteur (14).

14. Composant (2) de réseau de bord selon la revendication précédente, **caractérisé en ce que** l'élément conducteur (14) forme une borne de connexion commune pour le groupe de conducteurs (B).

15. Composant (2) de réseau de bord selon l'une quelconque des revendications précédentes, **caractérisé en ce que**, à l'état monté, les conducteurs (10) sont raccordés à différentes sources de tension à potentiel de tension différent.
